# EUROPEAN PATENT SPECIFICATION

(11) **EP 2 249 064 B1**
(45) Date of publication and mention of the grant of the patent: **19.12.2012**
(21) Application number: 10161709.0
(22) Date of filing: 03.05.2010
(51) Int. Cl.: F15B 15/24, F16H 61/30

(54) **Hydraulic actuator for vehicle**
Hydraulischer Aktuator für ein Fahrzeug
Actionneur hydraulique pour véhicule

(30) Priority: 08.05.2009 JP 2009114007
(43) Date of publication of application: 10.11.2010
(73) Proprietor: Toyota Jidosha Kabushiki Kaisha, Toyota-shi, Aichi-ken, 471-8571 (JP)
(72) Inventor: Kano, Tomoyuki, Aichi-ken 471-8571 (JP); Iwasaki, Yasuhisa, Aichi-ken 471-8571 (JP); Shiozaki, Taro, Aichi-ken 471-8571 (JP)
(74) Representative: Albutt, Anthony John

(56) References cited:
- EP-A1- 0 538 962
- DE-A1- 19 903 511
- US-A- 4 644 852

## Description

### BACKGROUND OF THE INVENTION

### 1. Field of the Invention

The invention relates to a hydraulic actuator for a vehicle and, more particularly, to a technique for reducing the size of the hydraulic actuator in the axial direction.

### 2. Description of the Related Art

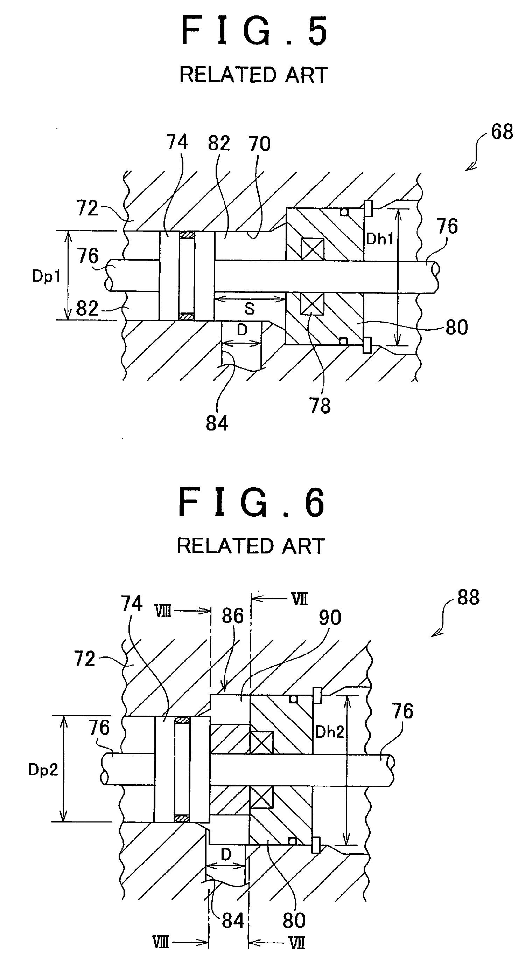

In order to perform shift operation or select operation instead of driver's operation, there is known a hydraulic actuator for a vehicle, which is used for assisting steering operating force, or the like. For example, as shown in FIG. 5, such a hydraulic actuator includes a cylinder body 72 having a cylinder bore 70, an output rod 76 having a piston 74 slidably fitted in the cylinder bore 70, rod covers 80 that allow the output rod 76 to slidably extend therethrough in order to seal the openings of the cylinder bore 70 of the cylinder body 72 in an oil tight manner and that are fitted to the openings in a state where the output rod 76 is sealed by packings 78. Hydraulic pressures supplied to a pair of oil chambers 82 partitioned by the piston 74 are controlled to generate a differential pressure between the pair of oil chambers 82, thus driving the output rod 76. The above hydraulic actuator is, for example, described in Japanese Patent Application Publication No. 08-230703 (JP-A-08-230703), Japanese Patent Application Publication No. 08-183469 (JP-A-08-183469) and Japanese Patent Application Publication No. 2002-019628 (JP-A-2002-019628). Such a hydraulic actuator for a vehicle has a relatively large axial size, so it is desired to further reduce the size in order to improve mountability to the vehicle.

Incidentally, for example, as shown in FIG. 5, the hydraulic actuator 68 for a vehicle is provided with a space S having an axial size larger than the diameter D of an oil passage 84 at a location beyond the stroke of the rod cover-side piston 74 in the oil chamber 82 so as not to cause interference between the oil passage 84, formed in the cylinder body 72 to supply hydraulic oil into the oil chamber 82 of the cylinder body 72, and the piston 74 that reciprocally moves in the cylinder body 72. Therefore, the space S becomes a bottleneck for reducing the axial size of the hydraulic actuator for a vehicle.

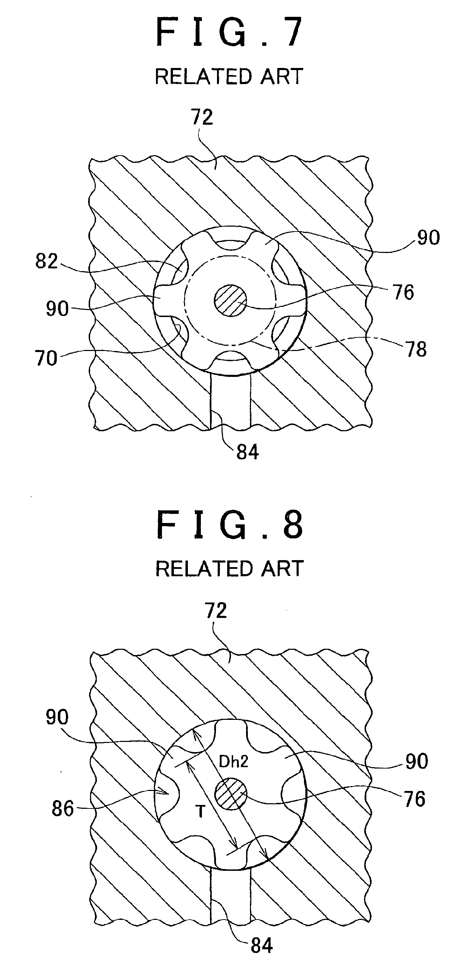

In contrast, as shown in FIG. 6, another hydraulic actuator 88 for a vehicle is suggested. The hydraulic actuator 88 has a structure such that a petaloid spacer 86 is provided instead of the space S, and the stroke is regulated in such a manner that the piston 74 is brought into contact with the spacer 86. The spacer 86 has a thickness equivalent to the diameter D of the oil passage 84, and, as shown in FIG. 7 that is a cross-sectional view taken along the line VII-VII in FIG. 6 and FIG. 8 that is a cross-sectional view taken along the line VIII-VIII in FIG. 6, a plurality of protrusions 90 parallel to the axial direction are provided at equiangular intervals in the circumferential direction. The size of each protrusion 90 in the circumferential direction is smaller than the diameter D of the oil passage 84, the root diameter T between the adjacent protrusions 90 is smaller than the outside diameter of the piston 74, that is, the inside diameter Dp2 of the cylinder bore 70, and is larger than the outside diameter of the packing 78. The inside diameter Dp2 of the cylinder bore 70 and the outside diameter Dh2 of the rod cover 80 in FIG. 6 are respectively larger than the inside diameter Dp1 of the cylinder bore 70 and the outside diameter Dh1 of the rod cover 80 of the hydraulic actuator 68 in FIG. 5.

The hydraulic actuator 88 for a vehicle shown in FIG. 6 uses the spacer 86 having a smaller axial size than the space S in FIG. 5. The axial size is reduced because the hydraulic actuator 88 has a structure such that the stroke is regulated by bringing the piston 74 into contact with the spacer 86.

However, the root diameter T between the adjacent protrusions 90 needs to be larger than the outside diameter of the packing 78, which is determined on the basis of the diameter of the output rod 76, and the outside diameter of the piston 74 needs to be larger than the root diameter T between the adjacent protrusions 90. Thus, the size of the hydraulic actuator 88 for a vehicle is not radially reduced. In addition, hydraulic pressure acts only on part of the area of the piston 74 when the hydraulic pressure is applied in a direction to separate the piston 74 from the spacer 86, so the response is poor. Furthermore, the moment occurs in the piston 74 to cause resistance or unbalanced wear of a bushing or packing. In addition, the protrusions 90 of the spacer 86 may block part of the opening of the oil passage 84, so a desired flow rate may not be obtained, and variations in flow rate and shift time occur. In order to prevent the above problem, it is necessary to fix the protrusions 90 of the spacer 86 so that the rotational phases of the protrusions 90 are deviated from the opening of the oil passage 84 during assembling of the hydraulic actuator 88 for a vehicle. Furthermore, the spacer 86 is interposed between a piston body 74 and the rod cover 80; however, there is a permissible clearance in manufacturing, so a gap easily occurs between the spacer 86 and the rod cover 80. This may cause the packing 78 to come off from the rod cover 80 or cause the spacer 86 to damage the outer peripheral portion of the packing 78 when pressed by the piston 74 to thereby decrease sealing performance.

The document US 4,644,852 discloses a hydraulic actuator according to the preamble of claim 1.

### SUMMARY OF THE INVENTION

The invention provides a hydraulic actuator for a vehicle, which is small in size in the radial direction, has a high response, is easy to assemble and can obtain durability of a bushing and a packing.

An aspect of the invention provides a hydraulic actuator for a vehicle. The hydraulic actuator includes: a cylinder body that has a cylinder bore having a center portion and open portions that are larger in diameter than the center portion; an output rod that has a piston slidably fitted in the cylinder bore; rod covers that allow the output rod to slidably extend therethrough and that are fitted in the respective open portions of the cylinder body in a state where the output rod is sealed by packings in order to seal the cylinder bore inside the cylinder body in an oil tight manner; oil passages that respectively supply hydraulic oil to a pair of oil chambers of the cylinder bore, the pair of oil chambers being partitioned by the piston; and an annular spacer, wherein annular grooves each having an axial size larger than the diameter of a corresponding one of the oil passages are formed on outer peripheral surfaces of the respective annular spacers, a plurality of radial grooves that provide fluid communication between the annular grooves and the corresponding oil chambers are formed in the annular spacers at sides adjacent to the piston, the annular spacers are fitted in between the rod covers and the center portion of the cylinder bore, and the stroke of the piston is regulated in such a manner that the piston contacts with any one of the annular spacers.

With the hydraulic actuator for a vehicle according to the above aspect, the annular grooves each having an axial size larger than the diameter of a corresponding one of the oil passages are formed on the outer peripheral surfaces of the respective annular spacers, and the plurality of radial grooves that provide fluid communication between the annular grooves and the corresponding oil chambers are formed in the annular spacers at sides adjacent to the piston. Then, the annular spacers are fitted in between the rod covers and the center portion of the cylinder bore, and the stroke of the piston is regulated in such a manner that the piston contacts with any one of the annular spacers. For this reason, as hydraulic oil is supplied from any one of the oil passages, hydraulic pressure is applied to the piston via the plurality of radial grooves. Therefore, no moment occurs in the piston, the response is good, and unbalanced wear of a packing or bushing is prevented. In addition, no plurality of protrusions are arranged on the spacers in the circumferential direction, so the spacers each have a small size in the radial direction, and assembling is easy because of no restrictions on assembling direction.

In the hydraulic actuator for a vehicle according to the above aspect, the annular grooves each may have a cross-sectional area larger than the cross-sectional area of a corresponding one of the oil passages.

With the hydraulic actuator for a vehicle according to the above aspect, the annular grooves each have a cross-sectional area that is larger than the cross-sectional area of a corresponding one of the oil passages. Thus, it is possible to ensure stable flow rate of hydraulic oil irrespective of the phase of each spacer around the axis, so variations in shift response is eliminated.

In the hydraulic actuator for a vehicle according to the above aspect, the annular spacers each may include a flange portion that radially protrudes from the outer peripheral surface of the annular spacer at a side adjacent to a corresponding one of the rod covers and a flat end surface that faces a corresponding one of the rod covers.

With the hydraulic actuator for a vehicle according to the above aspect, the spacers each include the flange portion that radially protrudes from the outer peripheral surface of the spacer at a side adjacent to a corresponding one of the rod covers and a flat end surface that faces a corresponding one of the rod covers. Thus, pressure from the oil passage acts on the flange portion to press the spacer against the rod cover. Thus, it is hard to form a gap between the spacer and the rod cover. This eliminates a situation that the packing comes off from the rod cover or the packing is damaged to decrease sealing performance.

In the hydraulic actuator for a vehicle according to the above aspect, the annular spacers may be respectively provided at both sides of the center portion so as to face each other via the center portion.

In the hydraulic actuator for a vehicle according to the above aspect, the plurality of radial grooves may be formed to radially extend through each annular spacer so as to open at an end surface of the annular spacer adjacent to the piston.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a view that illustrates the configuration of a relevant portion of a hydraulic actuator for a vehicle according to an embodiment of the invention;
FIG. 2 is a cross-sectional view, taken along the line II-II in FIG. 1, of a spacer provided inside the hydraulic actuator of FIG. 1;
FIG. 3 is a cross-sectional view, taken along the like III-III in FIG. 2, of the spacer provided inside the hydraulic actuator of FIG. 1;
FIG. 4 is an enlarged view that illustrates part of the spacer of FIG. 3;
FIG. 5 is a view that illustrates a relevant portion of a hydraulic actuator according to a related art;
FIG. 6 is a view that illustrates a relevant portion of a hydraulic actuator according to a related art;
FIG. 7 is a cross-sectional view, taken along the line VII-VII in FIG. 6, of a spacer provided inside the hydraulic actuator of FIG. 6; and
FIG. 8 is a cross-sectional view, taken along the line VIII-VIII in FIG. 6, of the spacer provided inside the hydraulic actuator of FIG. 6.

### DETAILED DESCRIPTION OF EMBODIMENTS

Hereinafter, an embodiment of the invention will be described with reference to the accompanying drawings.

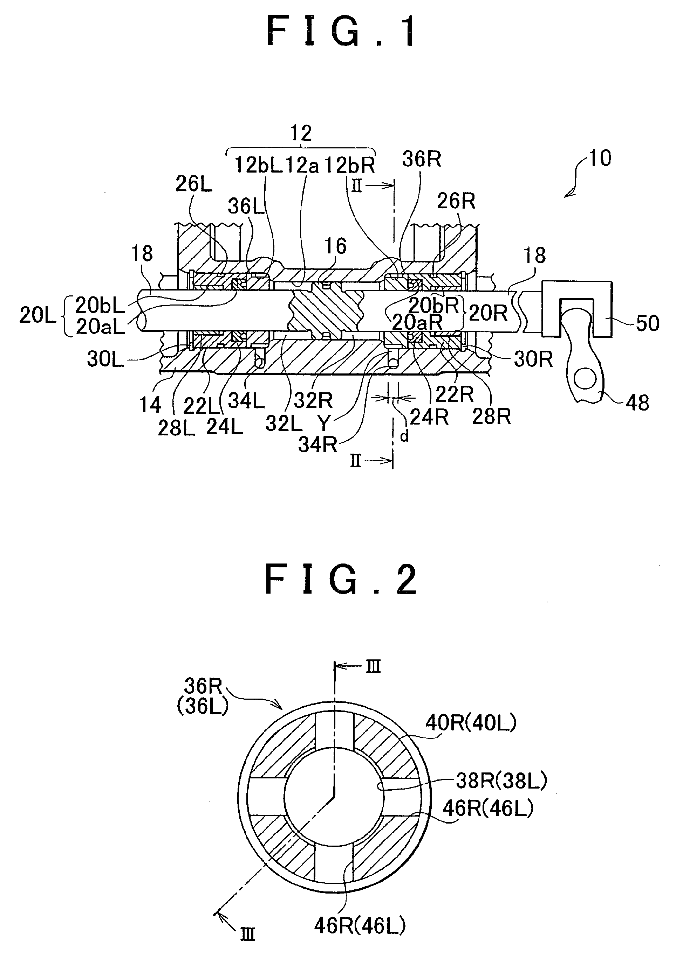

FIG. 1 shows a relevant portion of a hydraulic actuator 10 for a vehicle. The hydraulic actuator 10 is used for shift operation or select operation in a parallel shaft constant mesh transmission that is arranged in a power transmission path of the vehicle. The hydraulic actuator 10 includes a cylinder body 14 through which a circular cylindrical cylinder bore 12 is formed. The cylinder body 14 is integrally formed from part of a housing of the parallel shaft constant mesh transmission. The cylinder bore 12 has a center portion 12a and a pair of open portions 12bL and 12bR each having a diameter larger than that of the center portion 12a, so the cylinder bore 12 is formed in a stepped hole shape.

The hydraulic actuator 10 includes an output rod 18 and through holes 20L and 20R. The output rod 18 integrally has a piston 16 slidably fitted in the center portion 12a of the cylinder bore 12. The through holes 20L and 20R allow the output rod 18 to slidably extend therethrough. In addition, the hydraulic actuator 10 includes a pair of thick short cylindrical rod covers 22L and 22R and packings 24L and 24R. The pair of rod covers 22L and 22R are respectively fitted in the open portions 12bL and 12bR of the cylinder bore 12 of the cylinder body 14 in an oil tight manner. The packings 24L and 24R are respectively fitted to large-diameter portions 20aL and 20aR at sides adjacent to the piston 16 in the respective through holes 20L and 20R of the rod covers 22L and 22R in order to seal gaps between the rod covers 22L and 22R and the output rod 18 in an oil tight manner.

The packings 24L and 24R are so-called oil seals made of, for example, synthetic rubber, and slidably seal gaps from the output rod 18 in an oil tight manner. In addition, seal members 26L and 26R, such as synthetic rubber O rings, are fitted in outer peripheral grooves formed on outer peripheral surfaces of the rod covers 22L and 22R, and gaps between the rod covers 22L and 22R and the open portions of the cylinder bore 12 are sealed in an oil tight manner.

Accommodating holes 20bL and 20bR provided for the through holes 20L and 20R of the rod covers 22L and 22R at sides opposite to the sides at which the piston 16 is provided. Bushings 28L and 28R are respectively fitted in the accommodating holes 20bL and 20bR in order to support the weight of the output rod 18 and a load applied to the output rod 18. The bushings 28L and 28R are made of iron-based material, and the sliding portions of the bushings 28L and 28R are coated with PTFE material (resin bimetal material). In addition, the rod covers 22L and 22R are prevented from coming off by snap rings 30L and 30R and fixed in the open portions 12bL and 12bR. The snap rings 30L and 30R are fitted in the inner peripheral grooves formed at portions adjacent to the open edges of the open portions 12bL and 12bR of the cylinder bore 12.

The center portion 12a of the cylinder bore 12 is partitioned into a pair of oil chambers 32L and 32R by the piston 16 fitted therein. The cylinder body 14 has a pair of oil passages 34L and 34R that are respectively in fluid communication with the pair of oil chambers 32L and 32R. The pair of oil passages 34L and 34R are respectively open at the inner peripheral surfaces of the open portions 12bL and 12bR of the cylinder bore 12 and located adjacent to the center portion 12a of the cylinder bore 12 with respect to the rod covers 22L and 22R.

A pair of spacers 36L and 36R are respectively fitted in the open portions 12bL and 12bR of the cylinder bore 12 and located adjacent to the center portion 12a of the cylinder bore 12 with respect to the rod covers 22L and 22R. The stroke end of the piston 16 is regulated in such a manner that any one of the pair of spacers 36L and 36R contacts with the piston 16. The pair of spacers 36L and 36R are fixedly interposed between center portion 12a side ends of the open portions 12bL and 12bR and the rod covers 22L and 22R.

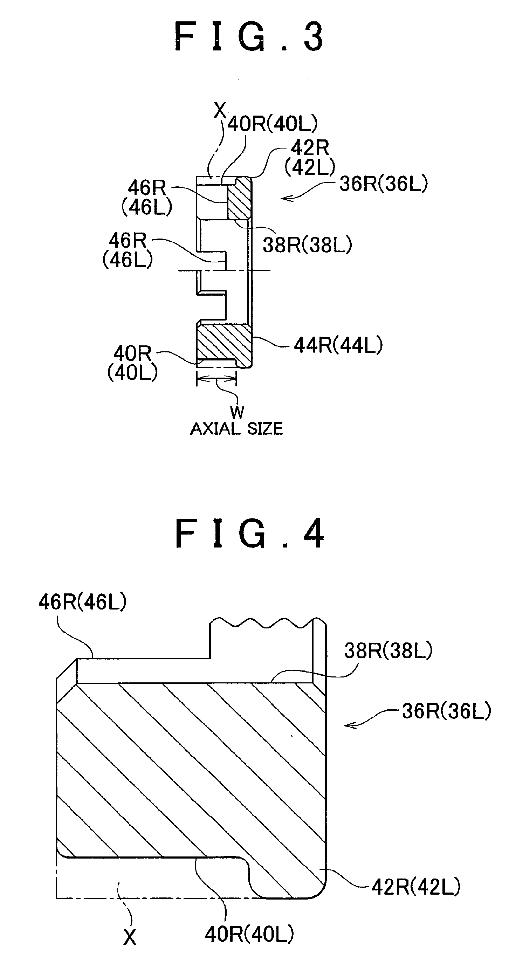

The pair of spacers 36L and 36R are formed similarly to each other, so the configuration of the spacer 36R will be typically described. Note that only reference numerals are shown in parentheses for the configuration of the spacer 36L, corresponding to the configuration of the spacer 36R. As shown in detail in FIG. 2 to FIG. 4, the spacer 36R (36L) is an annular thick disk plate that has a through hole 38R (38L) having a slightly larger diameter than the diameter of the output rod 18. An annular groove 40R (40L) is formed on the outer peripheral surface of the spacer 36R (36L). The annular groove 40R (40L) has an axial size (width) w larger than the opening diameter d of the oil passage 34R (34L). The annular groove 40R (40L) is open at an end surface adjacent to the piston 16. As a result, the spacer 36R (36L) has a flange portion 42R (42L) and a flat end surface 44R (44L). The flange portion 42R (42L) radially protrudes from the outer peripheral surface of the spacer 36R (36L) adjacent to the rod cover 22R (22L) . The end surface 44R (44L) is provided adjacent to the rod cover 22R (22L) and is able to closely contact with and face the rod cover 22R (22L).

The spacer 36R (36L) includes a plurality of (four in the present embodiment) radial grooves 46R (46L) that are formed to radially extend therethrough so as to open at an end surface adjacent to the piston 16 in order to provide fluid communication between the annular groove 40R (40L) and the oil chamber 32R (32L). By so doing, fluid communication is provided between the oil passage 34R (34L) and the oil chamber 32R (32L), while, when the piston 16 closely contacts with the end surface of the spacer 36R (36L) adjacent to the piston 16, the piston 16 is able to receive hydraulic pressure in a pressure receiving area equal to or larger than an opening area in which the plurality of those radial grooves 46R (46L) open toward the piston 16.

The annular groove 40R (40L) is formed so that the flow cross-sectional area X of the annular groove 40R (40L) is larger than the flow cross-sectional area Y of the oil passage 34R (34L). In addition, the flow cross-sectional area of the radial groove 46R (46L) is larger than the flow cross-sectional area X of the annular groove 40R (40L).

The output rod 18 of the thus configured hydraulic actuator 10 is provided with an engagement member 50 that pivotably engages an end of a lever 48, such as a shift lever or a select lever, of the parallel shaft constant mesh transmission. As hydraulic pressure is applied to the oil passage 34L or 34R, the output rod 18 is extended or drawn to automatically operate the lever 48.

As described above, with the hydraulic actuator 10 according to the present embodiment, the annular spacer 36L has the annular groove 40L on the outer peripheral surface thereof, and the annular spacer 36R has the annular groove 40R on the outer peripheral surface thereof. The annular groove 40L has an axial size w that is larger than the diameter d of the oil passage 34L, and the annular groove 40R has an axial size w that is larger than the diameter d of the oil passage 34R. In addition, the annular spacer 36L has the plurality of radial grooves 46L at a side adjacent to the piston 16, and the annular spacer 36R has the plurality of radial grooves 46R at a side adjacent to the piston 16. The plurality of radial grooves 46L provide fluid communication between the annular groove 40L and the oil chamber 32L. The plurality of radial grooves 46R provide fluid communication between the annular groove 40R and the oil chamber 32R. Then, the annular spacer 36L is fitted between the rod cover 22L and the center portion 12a of the cylinder bore 12, and the annular spacer 36R is fitted between the rod cover 22R and the center portion 12a of the cylinder bore 12. The stroke of the piston 16 is regulated in such a manner that the piston 16 contacts with the annular spacer 36L or 36R. For this reason, as hydraulic oil is supplied from the oil passage 34L, hydraulic pressure is applied via the plurality of radial grooves 46L. Similarly, as hydraulic oil is supplied from the oil passage 34R, hydraulic pressure is applied via the plurality of radial grooves 46R. Thus, no moment occurs in the piston 16, the response is good, and unbalanced wear of the packings 24L and 24R or bushings 28L and 28R is prevented. In addition, no plurality of protrusions are arranged on the spacer 36L or 36R in the circumferential direction, so the spacer 36L or 36R has a small size in the radial direction, and assembling is easy because of no restrictions on assembling direction.

In addition, with the hydraulic actuator 10 according to the present embodiment, the annular grooves 40L and 40R each have a flow cross-sectional area X that is larger than the flow cross-sectional area Y of a corresponding one of the oil passages 34L and 34R. Thus, it is possible to ensure stable flow rate of hydraulic oil irrespective of the phase of each of the spacers 36L and 36R around the axis, so variations in shift response are eliminated.

In addition, with the hydraulic actuator 10 according to the present embodiment, the spacer 36L has the flange portion 42L and the flat end surface 44L, and the spacer 36R has the flange portion 42R and the flat end surface 44R. The flange portion 42L radially protrudes from the outer peripheral surface of the spacer 36L adjacent to the rod cover 22L. The flange portion 42R radially protrudes from the outer peripheral surface of the spacer 36R adjacent to the rod cover 22R. The flat end surface 44L faces the rod cover 22L. The flat end surface 44R faces the rod cover 22R. Therefore, pressure from the oil passage 34L acts on the flange portion 42L to press the spacer 36L against the rod cover 22L, and pressure from the oil passage 34R acts on the flange portion 42R to press the spacer 36R against the rod cover 22R. Thus, it is hard to form a gap between the spacer 36L and the rod cover 22L and a gap between the spacer 36R and the rod cover 22R. This eliminates a situation that the packing 24L or 24R comes off from the rod cover 22L or 22R or the packing 24L or 24R is damaged to decrease sealing performance.

The embodiment of the invention is described with reference to the accompanying drawings; however, the aspect of the invention is not limited to the above embodiment. The aspect of the invention may be modified into alternative embodiments.

For example, in the above described embodiment, the cylinder bore 12 has the pair of open portions 12bL and 12bR at both ends thereof. Instead, the cylinder bore may have an open end and a closed end, and the open portion 12bR having a diameter larger than that of the center portion 12a may be provided at the open end. In this case, the output rod 18 is provided so as to extend through one rod cover 22R.

In addition, in the spacer 36R according to the above described embodiment, the annular groove 40R is open to the piston 16. Instead, both ends of the annular groove 40R in the axial direction may be closed on the outer peripheral surface of the spacer 36R.

In addition, in the above described embodiment, the cylinder body 14 is integrally formed from part of the housing of the parallel shaft constant mesh transmission. Instead, the cylinder body 14 may be formed of another member.

In addition, in the above described embodiment, the rod cover 22L or 22R may have another shape where necessary. In addition, the rod covers 22L and 22R are respectively fixed in the open portions 12bL and 12bR by the snap rings 30L and 30R. Instead, the rod covers 22L and 22R may be fixed in the open portions 12bL and 12bR by another fixing means, such as screwing.

Other embodiments are not described one by one; however, the aspect of the invention may be modified in various forms without departing from the scope of the invention.

While the invention has been described with reference to example embodiments thereof, it should be understood that the invention is not limited to the example embodiments or constructions. To the contrary, the invention is intended to cover various modifications and equivalent arrangements. In addition, while the various elements of the example embodiments are shown in various combinations and configurations, which are exemplary, other combinations and configurations, including more, less or only a single element, are also within the scope of the invention.

## Claims

1. A hydraulic actuator for a vehicle, comprising:
a cylinder body (14) that has a cylinder bore (12) having a center portion (12a) and open portions (12bL, 12bR) that are larger in diameter than the center portion (12a);
an output rod (18) that has a piston (16) slidably fitted in the cylinder bore (12);
rod covers (22L, 22R) that allow the output rod (18) to slidably extend therethrough and that are fitted in the respective open portions (12bL, 12bR) of the cylinder body (14) in a state where the output rod (18) is sealed by packings (24L, 24R) in order to seal the cylinder bore (12) inside the cylinder body (14) in an oil tight manner;
oil passages (34L, 34R) that respectively supply hydraulic oil to a pair of oil chambers of the cylinder bore (12), the pair of oil chambers being partitioned by the piston (16); and
annular spacers (36L, 36R), **characterized in that**
annular grooves (40L, 40R) each having an axial size (w) larger than the diameter (d) of a corresponding one of the oil passages (34L, 34R) are formed on outer peripheral surfaces of the respective annular spacers (36L, 36R),
a plurality of radial grooves (46L, 46R) that provide fluid communication between the annular grooves (40L, 40R) and the corresponding oil chambers (32L, 32R) are formed in the annular spacers (36L, 36R) at sides adjacent to the piston (16),
the annular spacers (36L, 36R) are fitted in between the rod covers (22L, 22R) and the center portion (12a) of the cylinder bore (12), and
the stroke of the piston (16) is regulated in such a manner that the piston (16) contacts with any one of the annular spacers (36L, 36R).

2. The hydraulic actuator for a vehicle according to claim 1, wherein the annular grooves (40L, 40R) each have a cross-sectional area larger than the cross-sectional area of a corresponding one of the oil passages.

3. The hydraulic actuator for a vehicle according to claim 1 or 2, wherein the annular spacers (36L, 36R) each include a flange portion (42L, 42R) that radially protrudes from the outer peripheral surface of the annular spacer at a side adjacent to a corresponding one of the rod covers (22L, 22R) and a flat end surface (44L, 44R) that faces a corresponding one of the rod covers (22L, 22R).

4. The hydraulic actuator for a vehicle according to any one of claims 1 to 3, wherein the annular spacers (36L, 36R) are respectively provided at both sides of the center portion (12a) so as to face each other via the center portion (12a).

5. The hydraulic actuator for a vehicle according to any one of claims 1 to 4, wherein the plurality of radial grooves (46L, 46R) are formed to radially extend through each annular spacer (36L, 36R) so as to open at an end surface of the annular spacer adjacent to the piston (16).

## Patentansprüche

1. Hydraulisches Stellglied für ein Fahrzeug, mit:
einem Zylinderkörper (14), der eine Zylinderbohrung (12) mit einem mittleren Abschnitt (12a) und offenen Abschnitten (12bL, 12bR) hat, die bezüglich des Durchmessers größer sind als der mittlere Abschnitt (12a)9999;
einer Ausgabestange (18), die einen verschiebbar in der Zylinderbohrung (12) eingebrachten Kolben (16) hat;
Stangenabdeckungen (22L, 22R), die der Ausgabestange (18) erlauben, sich durch diese hindurch verschiebbar zu erstrecken, und die in den jeweiligen offenen Abschnitten (12bL, 12bR) des Zylinderkörpers (14) in einen Zustand eingebracht sind, in dem die Ausgabestange (18) durch Dichtungen (24L, 24R) abgedichtet ist, um die Zylinderbohrung (12) innerhalb des Zylinderkörpers (14) gegenüber Öl abzudichten;
Öldurchgängen (34L, 34R), die jeweils Hydrauliköl zu einem Paar von Ölkammern der Zylinderbohrung (12) zuführen, wobei das Paar von Ölkammern von dem Kolben (16) aufgeteilt wird; und
ringförmigen Abstandshaltern (36L, 36R), **dadurch gekennzeichnet, dass**
ringförmige Nuten (40L, 40R), von denen jede eine größere axiale Größe (w) hat als ein Durchmesser (d) eines entsprechenden Öldurchgangs (34L, 34R), an Außenumfangsflächen der jeweiligen ringförmigen Abstandshaltern (36L, 36R) ausgebildet sind,
eine Vielzahl radialer Nuten (46L, 46R), die eine Fluidverbindung zwischen den ringförmigen Nuten (40L, 40R) und den entsprechenden Ölkammern (32L, 32R) vorsehen, in den ringförmigen Abstandshaltern (36L, 36R) an dem Kolben (16) nahe gelegenen Seiten ausgebildet sind,
die ringförmigen Abstandshalter (36L, 36R) zwischen den Stangenabdeckungen (22L, 22R) und dem mittigen Abschnitt (12a) der Zylinderbohrung (12) eingebracht sind, und
der Hub des Kolbens (16) auf eine solche Weise geregelt ist, dass der Kolben (16) irgendeinen der ringförmigen Abstandshalter (36L, 36R) berührt.

2. Hydraulisches Stellglied für ein Fahrzeug nach Anspruch 1, wobei jede der ringförmigen Nuten (40L, 40R) eine größere Querschnittsfläche hat als die Querschnittsfläche eines entsprechenden Öldurchgangs.

3. Hydraulisches Stellglied für ein Fahrzeug nach Anspruch 1 oder 2, wobei die ringförmigen Abstandshalter (36L, 36R) jeweils einen Flankenabschnitt (42L, 42R) haben, der radial von der Außenumfangsfläche des ringförmigen Abstandshalters an einer Seite nahe der entsprechenden Stangenabdeckung (22L, 22R) vorsteht, und eine flache Endfläche (44L, 44R), die einer entsprechenden Stangenabdeckung (22L, 22R) zugewandt ist.

4. Hydraulisches Stellglied für ein Fahrzeug nach einem der Ansprüche 1 bis 3, wobei die ringförmigen Abstandshalter (36L, 36R) jeweils an beiden Seiten des mittleren Abschnitts (12a) vorgesehen sind, um einander über den mittigen Abschnitt (12a) zugewandt zu sein.

5. Hydraulisches Stellglied für ein Fahrzeug nach einem der Ansprüche 1 bis 4, wobei die Vielzahl radialer Nuten (46L, 46R) ausgebildet sind, um sich radial durch jeden ringförmigen Abstandshalter (36L, 36R) zu erstrecken, um sich an einer Endfläche des ringförmigen Abstandshalters nahe den Kolben (16) zu öffnen.

## Revendications

1. Actionneur hydraulique pour un véhicule, comprenant :
un corps de cylindre (14) qui a un alésage de cylindre (12) ayant une partie centrale (12a) et des parties ouvertes (12bL, 12bR) qui présentent un diamètre plus grand que celui de la partie centrale (12a) ;
une tige de sortie (18) qui a un piston (16) ajusté de manière coulissante dans l'alésage de cylindre (12) ;
des manchons de tige (22L, 22R) qui permettent à la tige de sortie (18) de s'étendre de manière coulissante à travers ces manchons et qui sont ajustés dans les parties ouvertes respectives (12bL, 12bR) du corps de cylindre (14) dans un état où la tige de sortie (18) est scellée par des garnitures d'étanchéité (24L, 24R) afin d'assurer l'étanchéité de l'alésage de cylindre (12) à l'intérieur du corps de cylindre (14) d'une manière étanche à l'huile ;
des passages d'huile (34L, 34R) qui fournissent respectivement de l'huile hydraulique à une paire de chambres d'huile de l'alésage de cylindre (12), la paire de chambres d'huile étant séparée par le piston (16) ; et
des entretoises annulaires (36L, 36R), **caractérisé en ce que**
des rainures annulaires (40L, 40R) ayant chacune une taille axiale (W) supérieure au diamètre (d) d'un passage correspondant des passages d'huile (34L, 34R) sont formées sur des surfaces périphériques externes des entretoises annulaires respectives (36L, 36R),
une pluralité de rainures radiales (46L, 46R) qui fournissent une communication fluidique entre les rainures annulaires (40L, 40R) et les chambres d'huile correspondantes (32L, 32R) sont formées dans les entretoises annulaires (36L, 36R) au niveau des côtés adjacents au piston (16),
les entretoises annulaires (36L, 36R) sont ajustées entre les manchons de tige (22L, 22R) et la partie centrale (12a) de l'alésage de cylindre (12), et
la course du piston (16) est régulée de manière à ce que le piston (16) entre en contact avec l'une quelconque des entretoises annulaires (36L, 36R).

2. Actionneur hydraulique pour un véhicule selon la revendication 1, dans lequel les rainures annulaires (40L, 40R) ont chacune une surface en coupe transversale plus grande que la surface en coupe transversale d'un passage correspondant des passages d'huile.

3. Actionneur hydraulique pour un véhicule selon la revendication 1 ou 2, dans lequel les entretoises annulaires (36L, 36R) comportent chacune une partie de rebord (42L, 42R) qui fait saillie de manière radiale à partir de la surface périphérique externe de l'entretoise annulaire au niveau d'un côté adjacent à un manchon correspondant des manchons de tige (22L, 22R) et une surface d'extrémité plate (44L, 44R) qui fait face à un manchon correspondant des manchons de tige (22L, 22R).

4. Actionneur hydraulique pour un véhicule selon l'une quelconque des revendications 1 à 3, dans lequel les entretoises annulaires (36L, 36R) sont respectivement prévues au niveau des deux côtés de la partie centrale (12a) de manière à ce qu'elles soient l'une en face de l'autre via la partie centrale (12a).

5. Actionneur hydraulique pour un véhicule selon l'une quelconque des revendications 1 à 4, dans lequel la pluralité de rainures radiales (46L, 46R) sont formées pour s'étendre de manière radiale à travers chaque entretoise annulaire (36L, 36R) afin de s'ouvrir au niveau d'une surface d'extrémité de l'entretoise annulaire adjacente au piston (16).
